# EUROPEAN PATENT SPECIFICATION

(11) **EP 2 808 412 B1**
(45) Date of publication and mention of the grant of the patent: **17.06.2020**
(21) Application number: 13738542.3
(22) Date of filing: 18.01.2013
(51) Int. Cl.: C22C 38/50, C22C 38/44, C22C 38/06, C22C 38/00, C22C 38/02, C22C 38/04, C22C 38/42, C22C 38/48, C21D 8/02, C21D 9/08, C21D 9/46, C21D 9/52, B22D 11/12, F16L 9/02

(54) **STEEL STRIP FOR COILED TUBING AND METHOD FOR PRODUCING SAME**
STAHLBAND FÜR ROHRWENDEL UND HERSTELLUNGSVERFAHREN DAFÜR
BANDE D'ACIER POUR TUBAGE SPIRALÉ ET SON PROCÉDÉ DE FABRICATION

(30) Priority: 18.01.2012 JP 2012008063
(43) Date of publication of application: 03.12.2014
(73) Proprietor: JFE Steel Corporation, Tokyo 100-0011 (JP)
(72) Inventor: MATSUKI, Yasuhiro, Tokyo 100-0011 (JP); OGURA, Takahiko, Tokyo 100-0011 (JP); KAMI, Chikara, Tokyo 100-0011 (JP); NAKATA, Hiroshi, Tokyo 100-0011 (JP)
(74) Representative: Hoffmann Eitle
(86) International application number: PCT/JP2013/050884
(87) International publication number: WO 2013/108861

(56) References cited:
- EP-A1- 1 354 973
- WO-A1-2011/025042
- WO-A1-2011/111758
- WO-A1-2011/132763
- WO-A1-2012/002566
- CN-A- 101 898 295
- CN-A- 102 220 547
- JP-A- H 083 641
- JP-A- H06 212 255
- JP-A- H07 118 792
- JP-A- 2010 174 343

## Description

### Field

The present invention relates to a steel strip for coiled tubing excellent in uniformity in material quality for use in high-strength electric resistance welded steel tubes, particularly coiled tubing suitable for the API standards product API 5ST and a method for manufacturing the same.

### Background

High-strength electric resistance welded steel tubes are used in such wide fields as for use in oil well tubes, automobiles, and piping. A technique disclosed in Patent Literature 1 is known as a technique for manufacturing them, for example. The electric resistance welded steel tube means a steel tube formed into a pipe by continuously uncoiling a steel strip at room temperature to form it into a circular shape and weld-connecting as seam through electric resistance welding. The "high strength" in the present specification means that yield strength YS is 345 MPa or more and tensile strength TS is 483 MPa or more.

For various operations in oil wells, coiled tubing has been widely used as oil well tubes. The coiled tube is a small-diameter, long welded pipe (a high-strength electric resistance welded steel tube) with an outer diameter of about 20 to 100 mm wound around a reel. When in operation, it is unwound and inserted into an oil well and is rewound after operation. In order to prevent its breakage in the oil well, the coiled tube is required to have high strength and corrosion resistance and to be free of surface defects. The coiled tube is also required to have high fatigue strength, because repeated bending is applied thereto.

A steel strip as a material for such coiled tubing is slit and then the slit steel strips are welded in the longitudinal direction to make a product. In view of this, the steel strip as a material for the coiled tubing is required to have, in addition to the above properties, uniformity in sheet thickness and material quality in the longitudinal direction and the widthwise direction. Because the coiled tube is a small-diameter pipe, tension is applied in the longitudinal direction. For this reason, tension tests on steel strips for coiled tubing are generally performed in the longitudinal direction.

Patent Literature 2 describes a high-strength and high-plasticity continuous steel tube and a method for manufacturing the same. The steel tube comprises, in terms of percent by mass, C: 0.05 to 0.12%, Si: 0.17 to 0.37%, Mn: 0.60 to 1.75%, P: 0.01% or less, S: 0.005% or less, Al: 0.02 to 0.04%, Cr: 0.20 to 1.0%, Cu: 0.10 to 0.25%, Ni: 0.10 to 0.35%, V: 0.05% or less, Mo: 0.15 to 0.45%, Nb: 0.07% or less, Ti: 0.03% or less, N: 0.005% or less, Ca: 0.002 to 0.004%, and the balance of Fe and inevitable impurities. The manufacturing method comprises melting molten steel having the above-mentioned composition; casting the molten steel into a steel material; subjecting the steel material to hot rolling; and coiling a resultant steel strip, a finish rolling temperature being set to a temperature within the range of 700 to 950°C and a coiling temperature being set to a temperature within the range of 500 to 600°C.

Patent Literature 3 describes steel strips used for a CT80-grade continuous oil pipe and a method for manufacturing the strips. The steel strips have the following chemical components in terms of percent by mass: C: 0.04 to 0.1%, Si: 0.24 to 0.35%, Mn: 0.80 to 1.85%, P: not more than 0.015%, S: not more than 0.002%, N: not more than 0.0050%, Cr: 0.4 to 1.0%, Mo: 0.10 to 0.20%, sol. Al: 0.015 to 0.060%, Nb: 0.04 to 0.08%, Ti: 0.01 to 0.030%, Cu: 0.15 to 0.25% and Ni: 0.15 to 0.25%, the balance being Fe. The parameters of the manufacturing method of the steel strips are as follows: the soaking temperature is 1150 to 1250°C; the total reduction rate is greater than 70%, highpressure water descaling is carried out before rolling, the finish rolling starting temperature is 930 to 1000°C, and the final rolling temperature is 780 to 880°C; the cooling rate is 30 to 70°C/s; and the coiling temperature is 430 to 580°C.

### Citation List

### Patent Literature

Patent Literature 1: Japanese Patent No. 3491339
Patent Literature 2: CN 101 898 295 A
Patent Literature 3: CN 102 220 547 A

### Summary

### Technical Problem

A large amount of corrosion resistance elements are added to steel strips for coiled tubing in view of corrosion resistance in oil wells, while precipitation strengthening elements are also added thereto to ensure high strength. The corrosion resistance elements also serve as transformation strengthening elements, and their transformation strengthening capability and precipitation strengthening capability change in accordance with hot-rolling conditions. Because variations in material quality are large in accordance with hot-rolling conditions, edge parts of steel strips have been cut, setting large trim margins before forming tubes. In view of such circumstances, there is a demand for a steel strip for coiled tubing excellent in uniformity in material quality that eliminates cutting of edge parts. Although Patent Literature 1 discloses a manufacturing technique of a high-strength electric resistance welded steel tube that can be used for coiled tubing, there is no description there about uniformity in material quality across the entire length and the entire width of a coil.

The present invention has been achieved in view of the above problem, and objects thereof are to provide a steel strip for coiled tubing excellent in uniformity in material quality and a method for manufacturing the same. Solution to Problem

A method for manufacturing a steel strip for coiled tubing according to the present invention comprises: melting molten steel having a composition comprising, in terms of percent by mass, C: 0.10% or more and 0.16% or less, Si: 0.1% or more and 0.5% or less, Mn: 0.5% or more and 1.5% or less, P: 0.02% or less, S: 0.005% or less, Sol. Al: 0.01% or more and 0.07% or less, Cr: 0.4% or more and 0.8% or less, Cu: 0.25% or more and 0.5% or less, Ni: 0.15% or more and 0.3% or less, Mo: 0.1% or more and 0.2% or less, Nb: 0.01% or more and 0.04% or less, Ti: 0.005% or more and 0.03% or less, N: 0.005% or less, and optionally one or two selected from Sn: 0.001% or more and 0.005% or less and Ca: 0.001% or more and 0.003% or less, and the balance of Fe and inevitable impurities wherein the impurities optionally include Co: 0.1% or less, V: 0.01% or less and B: 0.0005% or less; casting the molten steel into a steel material; subjecting the steel material to hot rolling; and coiling a resultant steel strip, a finishing rolling temperature being set to a temperature within the range of 820°C or more and 920°C or less and a coiling temperature being set to a temperature within the range of 550°C or more and 620°C or less, wherein the time taken from the finish hot rolling to the coiling is 20 seconds or less.

A steel strip for coiled tubing according to the present invention is obtainable by the above-described manufacturing method and has the above-described composition.

### Advantageous Effects of Invention

The present invention can provide a steel strip for coiled tubing excellent in uniformity in material quality and a method for manufacturing the same.

### Brief Description of Drawings

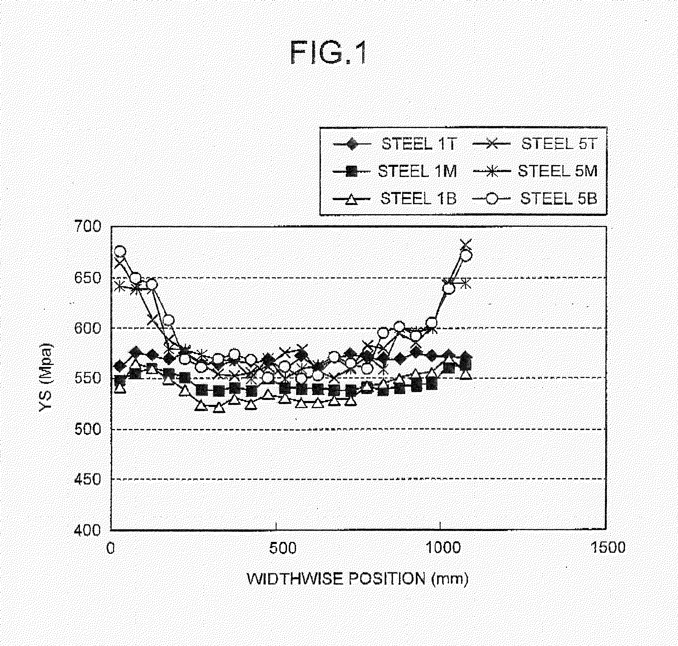

FIG. 1 is a diagram illustrating the relation between the longitudinal position and the widthwise position of a steel strip and yield strength (YS). Description of Embodiments

In order to solve the above problem, the inventors of the present invention examined the material quality of coiled tubing materials under various compositions and hot-rolling conditions to find the following.

In order for the coiled tubing materials to have corrosion resistance, corrosion resistance elements such as Cr, Cu, Ni, and Mo are added. However, because these elements are also transformation strengthening elements, strength changes in accordance with hot-rolling conditions with the microstructure change. In order to achieve a high-strength steel strip, it is also required to add precipitation strengthening elements. Among the precipitation strengthening elements, the addition of Nb can ensure suitably high strength even though fine NbC precipitates are not precipitated because Nb has the solute drag effect. This effect is unique compared with other precipitation strengthening elements such as V. In order to produce such effects through the addition of Nb, it is important to avoid the precipitation of Nb (CN); for that purpose, Ti is added in nearly an equivalent amount in atomic weight (in nearly the same amount in terms of percent by mole) with respect to N.

In the longitudinal and widthwise central part, fine NbC is precipitated having mainly ferrite and pearlite microstructure, thereby ensuring high strength. In a T end and a B end (hereinafter the B end means tail end at hot rolling, that is, the outer end at coiling, that is, the head end (T end) when the coil is uncoiled and pickled is referred to as the T end, and its opposite end is referred to as the B end) and widthwise edge parts whose finish rolling temperatures and coiling temperatures are lower than those of the central part, a decrement of precipitation strengthening is compensated by grain refining strengthening and by transformation strengthening having mainly bainite, thereby improving uniformity in material quality.

In the transformation strengthening, a secondary microstructure ratio such as pearlite and bainite combined changes in accordance with the precipitation condition of a ferrite structure during processes from finish rolling to coiling. For this reason, it is important to control a ferrite microstructure ratio, and it is important to control ferrite-forming elements such as Si and Al in accordance with the amounts of transformation strengthening elements such as Cr, Cu, Ni, and Mo.

When a finish delivery temperature changes, the ferrite microstructure ratio, and thus the secondary microstructure ratio changes through a change in nucleation sites of ferrite grains, leading to variations in material quality. In order to achieve a required high strength with small variations, the finishing temperature is controlled to a specific temperature above the Ar₃ point, and in particular, the finish rolling temperature is within the range of 820°C or more and 920°C or less.

During the finish rolling, the tail end of the steel strip temperature tends to be lower, because the part takes time to be rolled. In order to prevent this temperature decrease, it is considered to perform accelerated rolling to make the finishing temperature constant. However, although it is possible to make the coiling temperature constant by optimizing cooling conditions of a run out table (ROT) between the finish rolling and the coiling, the T end and the B end differ in cooling pattern of the steel strip due to a speed change. Even in such a case, however, a steel strip having small variations in material quality can be manufactured by the above method.

As for the coiling temperature, the coiling temperature of the widthwise central part is less than 550°C, where a bainite microstructure is formed, the edge parts have more bainite ratio, leading to variations in material quality. When the coiling temperature of the widthwise central part exceeds 620°C, the edge parts and the end parts of the steel strip cool faster than the other part after coiling. This results in a larger amount of fine precipitates in the edge parts and the end parts of the steel strip, whereby these parts increase in strength.

The microstructures and precipitates described above are influenced by a chemical composition and can be obtained only after controlling the chemical composition to be an appropriate range.

The following describes the present invention specifically.

The steel strip for coiled tubing according to the present invention contains, in terms of percent by mass, C: 0.10% or more and 0.16% or less, Si: 0.1% or more and 0.5% or less, Mn: 0.5% or more and 1.5% or less, P: 0.02% or less, S: 0.005% or less, Sol. Al: 0.01% or more and 0.07% or less, Cr: 0.4% or more and 0.8% or less, Cu: 0.25% or more and 0.5% or less, Ni: 0.15% or more and 0.3% or less, Mo: 0.1% or more and 0.2% or less, Nb: 0.01% or more and 0.04% or less, Ti: 0.005% or more and 0.03% or less, N: 0.005% or less, and optionally one or two selected from Sn: 0.001% or more and 0.005% or less and Ca: 0.001% or more and 0.003% or less, and the balance of Fe and inevitable impurities, wherein the impurities optionally include Co: 0.1% or less, V: 0.01% or less and B: 0.0005% or less.

Described first are reasons for the limitations in the components of a steel material used in the present invention. The denotation % in the components is percent by mass unless otherwise specified.

### C Content

C is an element that increases the strength of steel and is required to be contained in an amount of 0.10% or more to ensure the desired high strength in the present invention. However, when the C content exceeds 0.16%, NbC is difficult to dissolve completely at hot-rolling heating. NbC precipitates to the unsolved NbC as nuclei in the processes from the finishing to the coiling. This prevents fine NbC from being precipitated, reduces strength, and increases variations in material quality. For this reason, the C content is within the range of 0.10% or more and 0.16% or less.

### Mn Content

Mn is an element that increases the strength of steel and is required to be contained in an amount of 0.5% or more to ensure the desired high strength. However, when Mn is excessively contained, the delay of pearlite transformation is large, a structure having mainly pearlite is difficult to be formed in the central part, and a difference in material quality between the edge and the end parts and the central part becomes large. Thus, the Mn content is within the range of 0.5% or more and 1.5% or less. The Mn content is preferably within the range of 0.7% or more and 1.2% or less.

### P Content

P is likely to be segregated in grain boundaries or other sites and brings about nonuniformity in material quality. For this reason, P is preferably reduced to a minimum as one of the inevitable impurities; however, the content thereof up to about 0.02% is allowable. Thus, the P content is 0.02% or less. The P content is preferably 0.01% or less.

### S Content

S is likely to form Ti sulfide in steel. The Ti sulfide serves as NbC precipitation sites, which prevents high strength and increases variations in strength. For this reason, the S content is 0.005% or less. The S content is preferably 0.003% or less.

### Cr, Cu, and Ni Contents

Cr, Cu, and Ni are elements to be added in order to provide corrosion resistance. In order to provide corrosion resistance, Cr, Cu, and Ni are required to be contained in amounts of 0.4% or more, 0.1% or more, and 0.1% or more, respectively. However, when the element is excessively contained, a bainite structure is produced in other than edge parts, increasing variations in material quality. For this reason, the Cr, Cu, and Ni contents are within the range of 0.4% or more and 0.8% or less, 0.25% or more and 0.5% or less, and 0.15% or more and 0.3% or less, respectively. The Cr, Cu, and Ni contents are preferably within the range of 0.55% or more and 0.65% or less, 0.25% or more and 0.40% or less, and 0.15% or more and 0.30% or less, respectively.

### Mo, Si, and Sol. Al Contents

Mo, Si, and Al are ferrite-forming elements and are added in order to adjust the secondary microstructure ratio in the end parts. Mo in particular is also a carbide-forming element and has an effect of reducing variations in material quality through the secondary microstructure ratio. In order to produce this effect, Mo is required to be contained in an amount of 0.1% or more. However, when the Mo content exceeds 0.2%, a bainite structure precipitates accordingly, and the secondary microstructure ratio is not constant, thereby increasing variations in material quality. For this reason, the Mo content is within the range of 0.1% or more and 0.2% or less. The Mo content is preferably within the range of 0.10% or more and 0.15% or less.

Si and Sol. Al adjust the ferrite structure ratio, and they are required to be contained in amounts of 0.1% or more and 0.01% or more, respectively. When Si is contained excessively, red scale is produced on the surface. The surface part on which the red scale is produced has large surface roughness, making the temperature lower compared with the other surface part during cooling, leading to variations in material quality. When Al is contained excessively, the amount of alumina-based inclusions increases, thereby degrading the surface property. For this reason, the Si and Sol. Al contents are within the ranges of 0.1% or more and 0.5% or less and 0.01% or more and 0.07% or less, respectively. The Si and Sol. Al contents are preferably within the ranges of 0.25% or more and 0.35% or less and 0.02% or more and 0.04% or less, respectively.

### Nb Content

Nb is required to be contained in an amount of 0.01% or more in order to be precipitated as fine NbC in hot rolling, increase strength, and reduce variations in material quality. The end parts of the steel strip increase in strength through transformation strengthening, and the part other than the end parts requires more precipitation strengthening to compensate it for consistency. In order to produce this effect, the contents of Ti and N need to be controlled as described below, in addition to the Nb content. When the Nb is contained excessively, it is difficult to be fully dissolved at a hot-rolling heating temperature, which does not increase strength to an extent consistent with the content and causes variations in material quality. For this reason, the Nb content is within the range of 0.01% or more and 0.04% or less. The Nb content is preferably within the range of 0.015% or more and 0.025% or less.

### Ti Content

As described above, Nb is an important element in view of increasing strength and reducing variations. However, when Nb and N bond to each other, NbC is precipitated with Nb (CN) as nuclei, which makes it difficult to achieve high strength and uniform material quality. Thus, it is important to contain Ti in an amount of 0.005% or more, thereby precipitating TiN and precipitating fine NbC. Ti forms sulfide. However, there are several types of sulfide for Ti, such as TiS, Ti₄C₂S₂, or other precipitates, the influence on strength of which differs. In view of this, Ti is contained in accordance with the contents of N and S. When the Ti is contained excessively, the amount of TiC increases, and the amount of fine NbC decreases. For this reason, the Ti content is within the range of 0.005% or more and 0.03% or less. The Ti content is preferably within the range of 0.010% or more and 0.020% or less.

### N Content

N is one of the inevitable impurities. When Nb nitride is formed, the amount of fine NbC decreases. As a measure against this, Ti is added to form TiN; when N is contained excessively, Nb (CN) is precipitated. For this reason, the N content is 0.005% or less. The N content is preferably 0.003% or less.

The compositions above are basic compositions of the steel strip. In addition to these basic compositions, one or two selected from Ca: 0.001% or more and 0.003% or less and Sn: 0.001% or more and 0.005% or less may be contained.

Ca is an element forming sulfide. The present invention adjusts so that Ti sulfide is precipitated. Ti is an element that can be readily oxidized, and it may be difficult to adjust its content appropriate for the S content. In such a case, Ca is added as needed. When the sulfide is formed with added Ca, Ti may be contained in an amount appropriate for the N content, facilitating material quality control. However, the Ca content exceeds 0.003%, Ca-based precipitates serve as NbC precipitation sites, leading to variations in material quality. For this reason, the Ca content is within the range of 0.003% or less. In order to produce the above effect effectively, the Ca content is preferably 0.001% or more.

Sn is added for corrosion resistance as needed. Sn is an element that tends to be segregated. In order to prevent variations in strength caused by the segregation, the Sn content is 0.005% or less. In order to produce the effect of corrosion resistance effectively, the Sn content is preferably 0.001% or more.

The balance other than the above components is made up of Fe and inevitable impurities. When the inevitable impurities are not added intentionally, they are allowed to be contained in amounts of Co: 0.1% or less, V: 0.01% or less, and B: 0.0005% or less.

### Method for Manufacturing High-strength Steel strip

Described next is a method for manufacturing a high-strength steel strip having the above chemical composition.

First, a steel material having the above composition is manufactured. The method for manufacturing the steel material uses, but not limited to, normal melting means such as converters and preferably uses casting means such as continuous casting with less segregation to form the steel material such as a slab. In order to prevent segregation, soft reduction and electromagnetic stirring are preferably used.

Next, the thus obtained steel material is subjected to a hot-rolling process. In the hot-rolling process, the steel material is heated, subjected to hot-rolling including rough rolling and finish rolling to form a hot-rolled steel strip, and after the completion of the finish rolling, the steel strip is coiled.

When the heating temperature during the hot-rolling process is less than 1,200°C, coarse NbC and Nb (CN) are insufficiently dissolved, and when they are reprecipitated during the hot rolling, variations in strength within the coil increase. When the heating temperature exceeds 1,280°C, austenite grains are coarsened, and the number of precipitate forming sites decreases during the hot rolling, causing a decrease in strength. Thus, the heating temperature during the hot rolling process is preferably within the range of 1,200°C or more and 1,280°C or less. The slab may be once cooled to room temperature and then reheated or may be heated without slab cooling.

The heated steel is subsequently subjected to the hot rolling including the rough rolling and the finish rolling. As for conditions of the rough rolling, it only requires forming sheet bars having certain dimensions and shapes; in order to ensure an unrecrystallization reduction ratio during the finish rolling, the thickness is preferably 40 mm or more. The finish rolling is performed with a finish entry temperature of preferably 950°C or less and with a finish delivery temperature within the range of 820°C or more and 920°C or less. By controlling the finish entry temperature to be lower, the finish rolling is performed in an unrecrystallized zone, thereby increasing strength through grain refining. In order to obtain this effect, the finish entry temperature is preferably 950°C or less.

Examples of the method for reducing the finish entry temperature may include increasing the number of passes in the rough rolling or waiting for the sheet bar after the rough rolling. When the finish delivery temperature is less than 820°C, the finish rolling is performed at a lower temperature than the Ar₃ point in the edge parts of the steel strip in particular, a difference in strength can occur due to a difference in microstructure between the edge parts and the central part. Because the Ar₃ point depends on the compositions, this temperature range is specific for the composition range of the present invention. The finish delivery temperature higher than 920°C coarsens austenite grains, decreases the number of precipitate forming sites, and causes a shortage of strength, and variations in material quality are likely to occur. Thus, the finish delivery temperature (the temperature of the widthwise central part) is within the range of 820°C or more and 920°C or less. In order to ensure the finish delivery temperature, the entire sheet bar may be heated by an induction heater or other devices. The finish rolling may be performed after the sheet bar is once coiled.

In the general hot-rolling process, the temperature of the edge parts of a steel strip is lower than that of the widthwise central part. In order to improve the widthwise material uniformity, it is preferable to increase the temperature of the edge parts by 10°C or more using edge heaters. The upper limit of the temperature increase of the edge parts by the edge heater is generally, but not limited to, 70°C or less due to equipment constraints. In order to obtain a temperature increase exceeding it, the speed of the steel strip is required to be reduced. However, this reduces the temperatures of the T end and the B end and degrades longitudinal uniformity in material quality, and rolling trouble is likely to occur during the hot rolling.

After the finish rolling, the hot-rolled steel strip is cooled on the run out table and coiled. In order to improve widthwise uniformity in material quality in this situation, a time taken from the finish hot rolling to the coiling is controlled to be 20 seconds or less. When the time taken from the finish hot rolling to the coiling exceeds 20 seconds, temperature drops in the end parts and the edge parts are large, causing variations in material quality. The lower limit of the time taken from the finish rolling to the coiling is usually, but not limited to, 10 seconds or more due to equipment constraints. The time taken from the finish hot rolling to the coiling can be changed by changing the rolling speed in the finish rolling, a pass schedule, or other conditions. In view of improving the accuracy of the coiling temperature, the hot-rolled steel strip may be cooled with a cooling rate of 50°C/s or more.

The edge parts may be masked on the ROT to reduce the cooling of the edge parts. However, the masked parts are not stabilized when the steel strip meanders, causing variations in material quality.

The coiling temperature when the hot-rolled steel strip is coiled (the coiling temperature of the widthwise central part) is within the range of 550°C or more and 620°C or less. When the coiling temperature is less than 550°C, while fine precipitates are hard to precipitate, a bainite ratio increases in other than the end parts of the steel strip, excessively increasing the strength of the end parts and increasing variations in strength. When the coiling temperature increases exceeding 620°C, coarse NbC is precipitated to decrease strength, and the strength of the end parts is increased due to a difference in the cooling speed of the coil, causing variations in strength. The coiling temperature is preferably within the range of 570°C or more and 600°C or less. The coil is air-cooled to room temperature. For the purpose of reducing a cooling time, the coil after being cooled to a temperature of 400°C or less, in which martensite is not produced, may be water-cooled.

After removing surface scale through pickling, the hot-rolled steel strip is slit into a certain width to be formed into coiled tubing. In order to facilitate the scale removing, skin pass (pre-pickling skin pass) may be performed prior to the pickling. The pre-pickling skin pass also has an effect of inhibiting the occurrence of the yield point elongation of the pickled steel strip and is desirable in view of reducing variations in yield strength. After pickling, skin pass may be performed for the purpose of cutting faulty parts and surface inspection. In the pickling, in order to ensure an elongation ratio, one or more of in-line skin pass and a tension leveler may be used.

### Examples

Pieces of molten metal of the chemical compositions listed in Table 1 were melted to form slabs (steel materials) by continuous casting. These slabs were heated at a heating temperature of 1,230°C or more and 1,270°C or less, and were subjected to rough rolling at a temperature of 970°C or more and 1,000°C or less to form rough bars with a thickness of 45 mm, thereafter the rough bars were inserted into finish rolling with a finish entry temperature of 890°C or more and 920°C or less to be subjected to finish rolling under the conditions (the widthwise central part) listed in Table 2, and the resultants were subjected to a hot-rolling process that performs coiling at the coiling temperatures (the coiling temperatures of the widthwise central part) listed in Table 2 to form hot-rolled steel strips (sheet thickness: 4.5 mm; sheet width: 1,110 mm). In order to avoid the finishing temperature from dropping during the rolling, accelerated rolling was performed. Edge heaters were used before the finish rolling to heat the edge parts each have a width of 50 mm at a temperature within the range of +30°C or more and +50°C or less. The time taken from the finish rolling to the coiling was 11 seconds or more and 16 seconds or less. Next, some coils were skinpassed before pickling as listed in Table 2, and scale on the surface of the hot-rolled steel strips was removed through pickling.

Test pieces (test piece width: 50 mm) with an ASTM A370 gauge length of 2 inches and with a parallel-part width of 38 mm were longitudinally cut out of a 5 m (T) part from the head end, a longitudinal central (M) part, and a 5 m (B) part from the tail end of the thus manufactured pickled steel strip across the entire width (22 pieces), and tensile tests were performed thereon. The tensile results of the widthwise central parts are listed in Table 2 together. The yield strength (YS) of the plate-shaped test pieces obtained from respective longitudinal (T, M, B) and widthwise positions of No. 1 (Steel 1, a reference example) steel and No. 5 (Steel 5, a comparative example) steel is illustrated in FIG. 1. In order to evaluate variations in material quality in the coil longitudinal directions (T, M, B) and widthwise direction (22 pieces), a value obtained by subtracting a minimum value from a maximum value of YS was determined as ΔYS (ΔYS is a variation evaluation including the data of not only the widthwise central part, but also the edges). The values are also listed in Table 2.

As listed and illustrated in Table 2 and FIG. 1, it is revealed that the comparative example, which deviates from the scope of the present invention, has larger widthwise and longitudinal variations in material quality, whereas the inventive example has smaller widthwise and longitudinal variations in material quality and is excellent in uniformity in material quality.

**Table 1**

| Composition (% by mass) | | | | | | | | | | | | | | | | |
|---|---|---|---|---|---|---|---|---|---|---|---|---|---|---|---|---|
| No. | C | Si | Mn | P | S | Sol. Al | Cr | Cu | Ni | Mo | Nb | Ti | N | Ca | Sn | Remarks |
| 1 | 0.12 | 0.33 | 0.84 | 0.007 | 0.003 | 0.046 | 0.60 | 0.30 | 0.13 | 0.11 | 0.020 | 0.014 | 0.0028 | tr. | tr. | Reference example |
| 2 | 0.11 | 0.28 | 0.96 | 0.008 | 0.002 | 0.035 | 0.57 | 0.27 | 0.16 | 0.14 | 0.033 | 0.008 | 0.0023 | 0.0024 | tr. | Inventive example |
| 3 | 0.15 | 0.19 | 0.62 | 0.015 | 0.003 | 0.021 | 0.49 | 0.42 | 0.28 | 0.18 | 0.017 | 0.017 | 0.0034 | 0.0003 | 0.003 | Inventive example |
| 4 | 0.11 | 0.37 | 1.18 | 0.010 | 0.001 | 0.052 | 0.64 | 0.19 | 0.15 | 0.12 | 0.034 | 0.022 | 0.0029 | 0.0029 | 0.005 | Reference example |
| 5 | 0.14 | 0.32 | 0.75 | 0.009 | 0.001 | 0.028 | 0.56 | 0.26 | 0.11 | 0.18 | 0.002 | 0.007 | 0.0035 | 0.0001 | tr. | Comparative example |
| 6 | 0.08 | 0.27 | 0.88 | 0.019 | 0.004 | 0.036 | 0.54 | 0.21 | 0.09 | 0.06 | 0.030 | 0.018 | 0.0041 | 0.0020 | 0.004 | Comparative example |

**Table 2**

| No. | Longitudinal | Finishing temperature (°C) | Coiling temperature (°C) | Skin pass | YS (MPa) | TS (MPa) | EL (%) | ΔYS (MPa) | Remarks |
|---|---|---|---|---|---|---|---|---|---|
| 1 | T | 858 | 567 | Performed | 559 | 674 | 27.6 | 53 | Reference example |
| 1 | M | 870 | 578 | Performed | 540 | 678 | 28.2 | | |
| 1 | B | 878 | 590 | Performed | 531 | 678 | 28.2 | | |
| 1 | T | 806 | 586 | Performed | 575 | 686 | 26.2 | 103 | Comparative example |
| 1 | M | 812 | 599 | Performed | 519 | 643 | 30.2 | | |
| 1 | B | 814 | 603 | Performed | 569 | 685 | 25.8 | | |
| 1 | T | 876 | 512 | Performed | 655 | 757 | 19.4 | 156 | Comparative example |
| 1 | M | 880 | 508 | Performed | 594 | 702 | 22.1 | | |
| 1 | B | 886 | 516 | Performed | 660 | 749 | 19.8 | | |
| 2 | T | 856 | 586 | Performed | 590 | 699 | 26.8 | 43 | Inventive example |
| 2 | M | 852 | 577 | Performed | 572 | 691 | 27.7 | | |
| 2 | B | 849 | 592 | Performed | 584 | 700 | 27.0 | | |
| 3 | T | 871 | 594 | Not performed | 570 | 659 | 28.0 | 60 | Inventive example |
| 3 | M | 859 | 587 | Not performed | 566 | 655 | 27.1 | | |
| 3 | B | 864 | 601 | Not performed | 559 | 653 | 27.4 | | |
| 4 | T | 888 | 577 | Performed | 571 | 660 | 28.1 | 45 | Reference example |
| 4 | M | 881 | 564 | Performed | 566 | 664 | 27.2 | | |
| 4 | B | 875 | 580 | Performed | 570 | 657 | 27.6 | | |
| 5 | T | 842 | 566 | performed | 624 | 687 | 23.4 | 132 | Comparative example |
| 5 | M | 833 | 558 | Not performed | 549 | 648 | 26.1 | | |
| 5 | B | 828 | 564 | performed | 610 | 690 | 24.8 | | |
| 6 | T | 866 | 555 | Not performed | 503 | 542 | 30.1 | 124 | Comparative example |
| 6 | M | 842 | 557 | Not performed | 442 | 518 | 32.8 | | |
| 6 | B | 850 | 560 | Not performed | 499 | 544 | 31.9 | | |

Although the embodiments to which the invention achieved by the inventors is applied are described, the present invention is not limited by the description constituting part of the disclosure of the present invention by the present embodiments. In other words, other embodiments, examples, and operating techniques performed by those skilled in the art based on the present embodiments are all included in the scope of the present invention.

### Industrial Applicability

The present invention can provide a steel strip for coiled tubing and a method for manufacturing the same.

## Claims

1. A method for manufacturing a steel strip for coiled tubing, the method comprising:
melting molten steel having a composition comprising, in terms of percent by mass, C: 0.10% or more and 0.16% or less, Si: 0.1% or more and 0.5% or less, Mn: 0.5% or more and 1.5% or less, P: 0.02% or less, S: 0.005% or less, Sol. Al: 0.01% or more and 0.07% or less, Cr: 0.4% or more and 0.8% or less, Cu: 0.25% or more and 0.5% or less, Ni: 0.15% or more and 0.3% or less, Mo: 0.1% or more and 0.2% or less, Nb: 0.01% or more and 0.04% or less, Ti: 0.005% or more and 0.03% or less, N: 0.005% or less, and optionally one or two selected from Sn: 0.001% or more and 0.005% or less and Ca: 0.001% or more and 0.003% or less, and the balance of Fe and inevitable impurities wherein the impurities optionally include Co: 0.1% or less, V: 0.01% or less and B: 0.0005% or less;
casting the molten steel into a steel material;
subjecting the steel material to hot rolling; and
coiling a resultant steel strip,
a finish rolling temperature being set to a temperature within the range of 820°C or more and 920°C or less and a coiling temperature being set to a temperature within the range of 550°C or more and 620°C or less,
wherein the time taken from the finish hot rolling to the coiling is 20 seconds or less.

2. The method according to claim 1, wherein the composition comprises, in terms of percent by mass, one or two selected from Sn: 0.001% or more and 0.005% or less and Ca: 0.001% or more and 0.003% or less.

3. A steel strip for coiled tubing obtainable by the method according to claim 1 or 2 and having the composition as defined in claim 1 or 2.

## Patentansprüche

1. Verfahren zur Herstellung eines Stahlbands für Rohrwendel, das Verfahren umfassend:
das Schmelzen einer Stahlschmelze, die eine Zusammensetzung aufweist, in Bezug auf Massenprozent, umfassend C: 0,10% oder mehr und 0,16% oder weniger, Si: 0,1% oder mehr und 0,5% oder weniger, Mn: 0,5% oder mehr und 1,5% oder weniger, P: 0,02% oder weniger, S: 0,005% oder weniger, Sol. Al: 0,01% oder mehr und 0,07% oder weniger, Cr: 0,4% oder mehr und 0,8% oder weniger, Cu: 0,25% oder mehr und 0,5% oder weniger, Ni: 0,15% oder mehr und 0,3% oder weniger, Mo: 0,1% oder mehr und 0,2% oder weniger, Nb: 0,01% oder mehr und 0,04% oder weniger, Ti: 0,005% oder mehr und 0,03% oder weniger, N: 0,005% oder weniger und gegebenenfalls eines oder zwei, ausgewählt aus Sn: 0,001% oder mehr und 0,005% oder weniger und Ca: 0,001% oder mehr und 0,003% oder weniger, und den Rest aus Fe und unvermeidbaren Verunreinigungen, worin die Verunreinigungen gegebenenfalls Co: 0,1% oder weniger, V: 0,01% oder weniger und B: 0,0005% oder weniger enthalten;
das Gießen der Stahlschmelze in ein Stahlmaterial;
das Warmwalzen des Stahlmaterials; und
das Aufwickeln des resultierenden Stahlbands,
wobei die Endwalztemperatur auf eine Temperatur innerhalb des Bereichs von 820°C oder mehr und 920°C oder weniger eingestellt wird und die Aufwickeltemperatur auf eine Temperatur innerhalb des Bereichs von 550°C oder mehr und 620°C oder weniger eingestellt wird,
worin die Zeit vom Endwarmwalzen bis zum Aufwickeln 20 Sekunden oder weniger beträgt.

2. Verfahren gemäß Anspruch 1, worin die Zusammensetzung, in Bezug auf Massenprozent, eines oder zwei umfasst, ausgewählt aus Sn: 0,001% oder mehr und 0,005% oder weniger und Ca: 0,001% oder mehr und 0,003% oder weniger.

3. Stahlband für Rohrwendel, das durch das Verfahren gemäß Anspruch 1 oder 2 erhältlich ist und die wie in Anspruch 1 oder 2 definierte Zusammensetzung aufweist.

## Revendications

1. Procédé de fabrication d'une bande d'acier pour tubage spiralé, le procédé comprenant:
l'élaboration d'acier liquide ayant une composition comprenant, en termes de pourcentage en masse, C : 0,10 % ou plus et 0,16 % ou moins, Si : 0,1 % ou plus et 0,5 % ou moins, Mn : 0,5 % ou plus et 1,5 % ou moins, P : 0,02 % ou moins, S : 0,005 % ou moins, Al sol. 0,01 % ou plus et 0,07 % ou moins, Cr : 0,4 % ou plus et 0,8 % ou moins, Cu : 0,25 % ou plus et 0,5 % ou moins, Ni : 0,15 % ou plus et 0,3 % ou moins, Mo : 0,1 % ou plus et 0,2 % ou moins, Nb : 0,01 % ou plus et 0,04 % ou moins, Ti : 0,005 % ou plus et 0,03 % ou moins, N : 0,005 % ou moins, et optionnellement un ou deux choisis parmi Sn : 0,001 % ou plus et 0,005 % ou moins et Ca : 0,001 % ou plus et 0,003 % ou moins, et le reste étant constitué de Fe et d'impuretés inévitables dans lequel les impuretés incluent optionnellement Co : 0,1 % ou moins, V : 0,01 % ou moins et B : 0,0005 % ou moins ;
la coulée de l'acier liquide en un matériau d'acier ;
la soumission du matériau d'acier à un laminage à chaud ; et
le bobinage d'une bande d'acier résultante,
une température de laminage de finition étant réglée à une température à l'intérieur de la plage de 820 °C ou plus et 920 °C ou moins et une température de bobinage étant réglée à une température à l'intérieur de la plage de 550 °C ou plus et 620 °C ou moins,
dans lequel le temps s'écoulant entre le laminage à chaud de finition et le bobinage est de 20 secondes ou moins.

2. Procédé selon la revendication 1, dans lequel la composition comprend, en termes de pourcentage en masse, un ou deux choisis parmi Sn : 0,001 % ou plus et 0,005 % ou moins et Ca : 0,001 % ou plus et 0,003 % ou moins.

3. Bande d'acier pour tubage spiralé pouvant être obtenue par le procédé selon la revendication 1 ou 2 et ayant la composition selon la revendication 1 ou 2.
